(19) 

Europäisches
Patentamt
European
Patent Office
Office européen
des brevets

(11)  **EP 4 509 289 A1**

(12)  **EUROPEAN PATENT APPLICATION**
published in accordance with Art. 153(4) EPC

(43) Date of publication:
**19.02.2025 Bulletin 2025/08**

(21) Application number: **23787805.3**

(22) Date of filing: **13.04.2023**

(51) International Patent Classification (IPC):
**B29C 45/14** (2006.01)   **C23F 1/16** (2006.01)
**B32B 15/08** (2006.01)

(52) Cooperative Patent Classification (CPC):
**B29B 11/14; B29C 45/14; B32B 15/08; C23F 1/16**

(86) International application number:
**PCT/CN2023/088201**

(87) International publication number:
**WO 2023/198163 (19.10.2023 Gazette 2023/42)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority:  **15.04.2022  CN 202210397468**

(71) Applicants:
• **Mitsui Chemicals, Inc.**
  **Tokyo 104-0028 (JP)**

• **Huizhou Jianuote Technology Co., Ltd**
  **Huizhou, Guangdong 516005 (CN)**

(72) Inventors:
• **SUMITA, Daiki**
  **Sodegaura-Shi Chiba 299--0265 (JP)**
• **LU, Haibing**
  **Huizhou,  Guangdong 516005 (CN)**

(74) Representative: **J A Kemp LLP**
  **80 Turnmill Street**
  **London EC1M 5QU (GB)**

(54)  **METAL MEMBER AND MANUFACTURING METHOD THEREFOR, ETCHING SOLUTION, AND METAL-RESIN COMPLEX AND MANUFACTURING METHOD FOR METAL-RESIN COMPLEX**

(57)  The present invention relates to a metal member and a manufacturing method therefor, an etching solution, and a metal-resin complex and a manufacturing method for the metal-resin complex. The metal member has a surface in which values of L, a and b in CIE1976 (L*a*b*) color space satisfy at least one of equation (1) ($b \geq 16$) or equation (2) ($L \geq 2.336 \times a - 2.0536$).

FIG. 1

EP 4 509 289 A1

**Description**

Technical Field

The present disclosure relates to a metal member and a manufacturing method for a metal member, an etching solution, and a metal-resin complex and a manufacturing method for a metal-resin complex.

Background Art

Metal-resin complexes exhibit features derived from a metal member (such as electrical conductivity or thermal conductivity) combined with features derived from a resin member (such as electrical insulation), and are used for various purposes such as components for vehicles, for example. In some cases of manufacturing a metal-resin complex, a metal member having a roughened surface is used in order to increase a joining strength with respect to the metal member. Such a metal member having a roughened surface is described in Patent Document 1, for example.

Prior Art Document

Patent Document

Patent Document 1: Japanese Patent No. 6387543

Summary of the Invention

Problem to be Solved by the Invention

A problem to be solved by an embodiment of the present disclosure is to provide a metal member that exhibits excellent joining strength with respect to a resin member.
A problem to be solved by another embodiment of the present disclosure is to provide a manufacturing method for the metal member.
A problem to be solved by another embodiment of the present disclosure is to provide an etching solution used for the manufacture of the metal member.
A problem to be solved by another embodiment of the present disclosure is to provide a metal-resin complex in which a resin member is joined to the metal member.
A problem to be solved by another embodiment of the present disclosure is to provide a manufacturing method for the metal-resin complex.

Means for Solving the Problem

The present disclosure includes the following embodiments.

<1> A metal member, having a surface in which values of L, a and b in CIE 1976 (L*a*b*) color space satisfy at least one of the following Formula (1) or Formula (2):

$$b \geq 16 \quad (1);$$

or

$$L \geq 2.336 \times a - 2.0536 \quad (2).$$

<2> The metal member according to <1>, wherein, in the surface, values of L and a in CIE 1976 (L*a*b*) color space satisfy the Formula (2) and the following Formula (3):

$$L \leq 2.336 \times a + 14.649 \quad (3).$$

<3> The metal member according to <2>, wherein, in the surface, a value of a in CIE 1976 (L*a*b*) color space satisfies the following Formula (4):

$$25 \geq a \geq 10 \quad (4).$$

<4> The metal member according to any one of <1> to <3>, comprising at least one of copper or copper alloy.

<5> The metal member according to any one of <1> to <4>, comprising a nitrogen-containing heteroaromatic compound that is disposed at at least a portion of the surface.

<6> An etching solution, comprising an amine compound, a nitrogen-containing heteroaromatic compound, a hydrogen peroxide, and an inorganic acid.

<7> The etching solution according to <6>, wherein a content of the amine compound with respect to a total mass of the etching solution is from 0.0001% by mass to 5% by mass.

<8> The etching solution according to <6>, wherein a content of the nitrogen-containing heteroaromatic compound with respect to a total mass of the etching solution is from 0.01% by mass to 2.0% by mass.

<9> The etching solution according to <6>, wherein a content of the hydrogen peroxide with respect to a total mass of the etching solution is from 0.5% by mass to 7% by mass.

<10> The etching solution according to <6>, wherein a content of the inorganic acid with respect to a total mass of the etching solution is from 5% by mass to 20% by mass.

<11> The etching solution according to <6>, wherein the amine compound is an amino acid compound.

<12> The etching solution according to <11>, wherein the amino acid compound is an aliphatic amino acid or a salt thereof.

<13> The etching solution according to <11>, wherein the amino acid compound is an $\alpha$-amino acid or a salt thereof.

<14> The etching solution according to any one of <6> to <13>, wherein the nitrogen-containing heteroaromatic compound is an azole compound.

<15> The etching solution according to <14>, wherein the azole compound is a triazole compound.

<16> A method of manufacturing the metal member according to any one of <1> to <5>, the method comprising roughening at least a portion of a surface of the metal member.

<17> The manufacturing method for the metal member according to claim 16, wherein the roughening is performed by etching at least a portion of the surface with the etching solution according to any one of <6> to <15>.

<18> A metal-resin complex, comprising the metal member according to any one of <1> to <5>, and a resin member that is joined to at least a portion of a surface of the metal member.

<19> The metal-resin complex according to <18>, wherein the resin member comprises a thermoplastic resin.

<20> The metal-resin complex according to <19>, wherein the thermoplastic resin comprises at least one selected from the group consisting of polyolefin resin, polyvinyl chloride, polyvinylidene chloride, polystyrene resin, AS resin, ABS resin, polyester resin, poly(meth)acrylic resin, polyvinyl alcohol, polycarbonate resin, polyamide resin, polyimide resin, polyether resin, polyacetal resin, fluorine resin, polysulfone resin, polyphenylene sulfide resin and polyketone resin.

<21> A manufacturing method for a metal-resin complex, the method comprising:

disposing the metal member according to any one of <1> to <5> at a mold; and
supplying a melted or softened resin to the mold.

Effect of the Invention

According to an embodiment of the present disclosure, a metal member that exhibits excellent joining strength with respect to a resin member is provided.

According to another embodiment of the present disclosure, a manufacturing method for the metal member is provided.

According to another embodiment of the present disclosure, an etching solution used for the manufacture of the metal member is provided.

According to another embodiment of the present disclosure, a metal-resin complex in which a resin member is joined to the metal member is provided.

According to another embodiment of the present disclosure, a manufacturing method for the metal-resin complex is provided.

Brief Description of the Drawings

Fig. 1 is a schematic sectional view illustrating an example of a metal-resin complex.

Fig. 2 is a schematic view illustrating a specimen used for the evaluation of airtightness.

Fig. 3 is a schematic view illustrating a section in a diagonal direction of the specimen used for the evaluation of airtightness.

Embodiments for Implementing the Invention

In the present disclosure, any numerical range described using the expression "from * to" represents a range in which numerical values described before and after the "to" are included in the range as a minimum value and a maximum value, respectively.

In a numerical range described in stages, in the present disclosure, an upper limit value or a lower limit value described in one numerical range may be replaced with an upper limit value or a lower limit value in another numerical range described in stages. Further, in a numerical range described in the present disclosure, the upper limit value or the lower limit value in the numerical range may be replaced with a value shown in the Examples.

In the present disclosure, in a case in which each component in a composition includes plural kinds of substances, the content of each component refers to the total content of the plural kinds of substances present in the composition, unless otherwise specified.

In the present disclosure, the definition of the term "step" includes not only an independent step which is distinguishable from another step, but also a step which is not clearly distinguishable from another step, as long as the purpose of the step is achieved.

<Metal member>

The metal member according to the present disclosure has a surface in which values of L, a and b in CIE 1976 (L*a*b*) color space satisfy at least one of the following Formula (1) or Formula (2):

$$b \geq 16 \quad (1);$$

or

$$L \geq 2.336 \times a - 2.0536 \quad (2).$$

The metal member exhibits excellent joining strength with respect to a resin member.

The projected mechanism by which the metal member according to the present disclosure improves the joining strength with respect to a resin member is thought to be as follows.

The values of L, a and b at a surface of the metal member, which relate to reflected light at the surface, reflect a degree of surface roughness. It is thought that a surface of the metal member at which the values of L, a and b satisfy at least one of Formula (1) or Formula (2) has a fine structure in which a degree of roughness is regulated appropriately, and that the fine structure is suitable for increasing the joining strength with respect to a resin member.

Although the projected mechanism has been explained above, the scope of the present disclosure is not limited in any way by the projected mechanism as described above.

The upper limit of b is not limited and may be, for example, 28.

The metal member preferably has a surface in which the values of L and a in CIE 1976 (L*a*b*) color space satisfy Formula (2), and further satisfy the following Formula (3). When the metal member satisfies Formula (2) and Formula (3), it is possible to suppress leakage of a fluid from a junction between the metal member and a resin layer more easily.

$$L \leq 2.336 \times a + 14.649 \quad (3)$$

It is thought that, because the surface roughness is more appropriately controlled, the metal member that satisfies Formula (2) and Formula (3) is suitable for suppressing leakage of a fluid, in addition to improving the joining strength with respect to a resin member.

Although the projected mechanism has been explained above, the scope of the present disclosure is not limited in any way by the projected mechanism as described above.

The metal member preferably has a surface in which the value of a in CIE 1976 (L*a*b*) color space satisfies the following Formula (4). When the metal member satisfies Formula (4), it is possible to suppress leakage of a fluid more easily.

$$25 \geq a \geq 10 \quad (4)$$

The values of L, a and b are measured with a spectroscopic chronometer. For example, a spectroscopic chronometer manufactured by Nippon Denshoku Industries Co., Ltd. with a trade name of NF 333 may be used for the measurement.

The type of the metal included in the metal member is not particularly limited. Specific examples of the metal include aluminum, iron, copper, nickel, gold, silver, platinum, cobalt, zinc, lead, tin, zirconium, titanium, niobium, chromium, aluminum, magnesium, manganese, and alloys including these metals. Moreover, examples of the metal member include plated materials obtained by subjecting base materials of the aforementioned metals and the aforementioned alloys to plating.

Examples of the alloy include brass, phosphor bronze and steel (for example, stainless steel). Examples of the plated member (i.e., members obtained by subjecting base materials of the aforementioned metals and the aforementioned alloys to plating) include plated steel. Examples of the material for a plating layer include zinc, nickel and chromium.

Among the metals as mentioned above, the metal member preferably includes at least one of copper or copper alloy.

The shape of the metal member is not particularly limited, and examples thereof include a flat panel, a disk, a bent plate, a rod, a cylinder and a lump. The configuration of a surface of the metal member is not particularly limited, and may be flat, curved or the like.

The thickness of the metal member is not particularly limited, and may be from 1 mm to 20 mm, for example. For example, when the metal member is used for cooling units, bus-bar or the like, the thickness of the metal member may be from 1 mm to 5 mm. When the metal member is used for cooling units for automobiles, the thickness of the metal member may be from 1 mm to 5 mm.

<Metal-resin complex>

The metal-resin complex according to the present disclosure includes the metal member according to the present disclosure, and a resin member that is joined to at least a portion of a surface of the metal member.

[Resin member]

The resin included in the resin member is not particularly limited, and may be selected depending on the purposes of the metal member, and the like.

Examples of the resin include thermoplastic resins (including elastomers) such as polyolefin resin (for example, polypropylene), polyvinyl chloride, polyvinylidene chloride, polystyrene resin, AS resin, ABS resin, polyester resin (for example, polybutylene terephthalate), poly(meth)acrylic resin, polyvinyl alcohol, polycarbonate resin, polyamide resin, polyimide resin, polyether resin, polyacetal resin, fluorine resin, polysulfone resin, polyphenylene sulfide resin and polyketone resin; and thermosetting resins such as phenol resin, melamine resin, urea resin, polyurethane resin, epoxy resin and unsaturated polyester resin.

The resin may be used singly, or in combination of two or more kinds.

From the viewpoint of moldability, the resin included in the resin member is preferably a thermoplastic resin.

The resin included in the resin member may include an additive of various kinds. Examples of the additive include a filler, a thermostabilizer, an antioxidant, a pigment, a weathering stabilizer, a fire retardant, a plasticizer, a dispersant, a lubricant, a mold-release agent, and an antistatic agent.

The resin member may include a filler. Examples of the filler include glass fiber, carbon fiber, carbon particles, clay, talc, silica, minerals and cellulose fiber. The filler may be used singly, or in combination of two or more kinds.

[Configuration]

The configuration of the metal-resin complex is not particularly limited as long as it includes a metal member and a resin member that is joined to at least a portion of a surface of the metal member, and may be designed depending on the purposes or the like of the metal-resin complex.

For example, the metal-resin complex may include plural metal members; or may include two or more metal members including a single kind of metal or two or more different kinds of metals.

For example, the metal-resin complex may include plural resin members; or may include two or more resin members including a single kind of resin or two or more different kinds of resins.

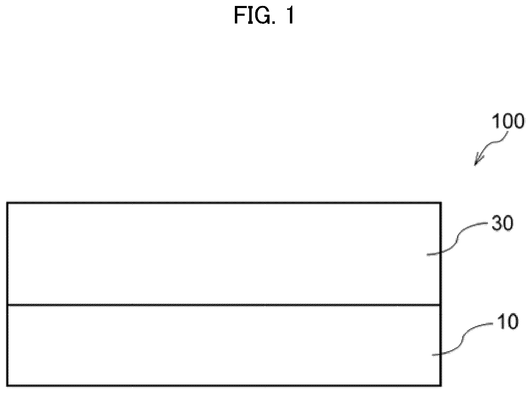

For example, as shown in Fig. 1, the metal-resin complex 100 may include a metal member 10 and a resin member 30 that is disposed on the metal member 10.

The metal-resin complex may be used for various purposes. Examples of the purposes for the metal-resin complex include cooling units, bus-bars, cooling component for vehicles, structural component for vehicles, on-board components for vehicles, casing for electronic components, casing for home appliances, building components, structural components, components for machines, components for automotives, components for electronic devices, household articles such as furniture or kitchen equipment, medical equipment, component for building materials, component for other purposes, and exterior components.

<Etching solution>

An etching solution according to the present disclosure as described below may be suitably used for obtaining the metal member according to the present disclosure, for example.
The etching solution according to the present disclosure includes an amine compound, a nitrogen-containing heteroaromatic compound, a hydrogen peroxide, and an inorganic acid.

[Amine compound]

The amine compound functions as a complexing agent that causes a metal to dissolve as a metal complex.
The amine compound is not particularly limited, and may be an alkanolamine compound, a hydroxylamine compound, an amino acid compound, or the like.
Examples of the alkanolamine compound include a mono-alkanolamine compound, a di-alkanolamine compound, and a tri-alkanolamine compound.
Examples of the mono-alkanolamine compound include monoethanolamine, 2-methylaminoethanol, 2-ethylaminoethanol, 2-(2-aminoethoxy)ethanol, 1-amino-2-propanol, monopropanolamine, dimethylaminoethanol, and a salt of these compounds.
Examples of the di-alkanolamine compound include diethanolamine, N-methyldiethanolamine, dibutanolamine, and a salt of these compounds.
Examples of the tri-alkanolamine compound include triisopropanolamine, triethanolamine, and a salt of these compounds.
Examples of the hydroxylamine include hydroxylamine, N-methyl hydroxylamine, N,N-dimethylhydroxylamine, N,N-diethylhydroxylamine, hydroxylamine sulfate, and hydroxylamine hydrochloride.
The amine compound may be used singly or in combination of two or more kinds.
From the viewpoint of etching properties, the content of the amine compound with respect to a total mass of the etching solution is preferably from 0.0001% by mass to 5% by mass, more preferably from 0.01% by mass to 0.5% by mass, further preferably from 0.01% by mass to 0.3% by mass, particularly preferably from 0.01% by mass to 0.1% by mass.
From the viewpoint of suppressing a leakage of a fluid more easily, the amine compound is preferably an amino acid compound.

[Amino acid compound]

An amino acid compound functions as a complexing agent that causes a metal to dissolve as a metal complex. Since an amino acid compound is highly adsorptive with respect to a metal, the amino acid compound suitably serves the function as a complexing agent.
Further, an amino acid compound has an ability to reduce an effect of a concentration of hydrogen peroxide, which serves as an oxidant, on a rate of etching. Specifically, decomposition of hydrogen peroxide with time may decrease the concentration of hydrogen peroxide in the etching solution and a rate of etching may be lowered. Therefore, an amino acid compound may reduce an effect of lowering a rate of etching due to the decomposition of hydrogen peroxide.
Further, since an amino acid compound has a pH buffer action, an amino acid compound may suppress the variation in pH of the etching solution and stabilize the pH of the etching solution.
In the present disclosure, the "amino acid compound" refers to an amino acid and a salt thereof. The amino acid refers to an organic compound having both an amino group and a carboxy group.
The amino acid compound is not particularly limited, and examples thereof include alanine, glutamic acid, glycine, leucine, isoleucine, proline, serine, threonine, valine, β-alanine, γ-alanine, arginine, asparagine, asparagine acid, cysteine, glutamine, histidine, lycine, methionine, triptophan, tyrosine, ornithine, phenylalanine, 4-chlorophenylalanine, 4-bromophenylalanine, 4-nitrophenylalanine, 3-(3,4-dihydrophenyl)alanine, α-methylphenylalanine, and a salt of these compounds. Examples of the salt of an amino acid compound include an alkali metal salt and an ammonium salt.
From the viewpoint of etching properties, the amino acid compound is preferably an aliphatic amino acid or a salt thereof.

From the viewpoint of etching properties, the amino acid compound is preferably an α-amino acid or a salt thereof.

A single kind of the amino acid compound may be used alone, or two or more kinds thereof may be used in combination.

From the viewpoint of etching properties, the content of the amino acid compound with respect to a total mass of the etching solution is preferably from 0.0001% by mass to 5% by mass, more preferably from 0.01% by mass to 0.5% by mass, further preferably from 0.01% by mass to 0.3% by mass, particularly preferably from 0.01% by mass to 0.1% by mass.

[Nitrogen-containing heteroaromatic compound]

The nitrogen-containing heteroaromatic compound functions to suppress rapid etching of a metal, and serves suitably to the adjustment of roughness at a surface of a metal.

In the present disclosure, the "nitrogen-containing heteroaromatic compound" refers to a compound having a hetero ring that contains nitrogen.

The nitrogen-containing heteroaromatic compound is not particularly limited, and examples thereof include compounds with a 5-membered ring, such as pyrrole compounds, pyrazole compounds, imidazole compounds, triazole compounds, and derivatives of these compounds; compounds with a 6-membered ring, such as pyridine compounds, pyridazine compounds, pyrazine compounds, pyrimidine compounds, triazine compounds, and derivatives of these compounds; and compounds with multiple rings, such as indole, purine, quinoline, isoquinoline, quinoxaline, cinnoline, quinazoline, phthalazine, naphthyridine, pteridin, acridine, naphthazine, phenazine, phenanthroline, and derivatives of these compounds.

From the viewpoint of etching properties, the nitrogen-containing heteroaromatic compounds is preferably an azole compound.

The azole compound is not particularly limited, and examples thereof include triazole compounds such as 1,2,3-triazole, 1,2,4-triazole, 5-phenyl-1,2,4-triazole, 5-amino-1,2,4-triazole, 1H-benzotriazole, 1-methyl-benzotriazole, 5-methyl-1H-benzotriazole and 3-amino-1H-triazole; tetrazole compounds such as 1H-tetrazole, 5-methyl-1H-tetrazole, 5-phenyl-1H-tetrazole and 5-amino-1H-tetrazole; imidazole compounds such as 1H-imidzole and 1H-benzoimidazole; and thiazole compounds such as 1,3-thiazole and 4-methylthiazole.

From the viewpoint of etching properties, the azole compound is preferably a triazole compound.

A single kind of the nitrogen-containing heteroaromatic compound may be used alone, or two or more kinds thereof may be used in combination.

From the viewpoint of readily securing the joining strength and airtightness, the content of the nitrogen-containing heteroaromatic compound with respect to a total mass of the etching solution is preferably from 0.01% by mass to 2.0% by mass, more preferably from 0.8% by mass to 1.5% by mass.

[Hydrogen peroxide]

The hydrogen peroxide functions as an oxidant that causes oxidation of a metal.

From the viewpoint of etching properties, the content of the hydrogen peroxide with respect to a total mass of the etching solution is preferably from 0.5% by mass to 7% by mass, more preferably from 1.3% by mass to 3.0% by mass.

[Inorganic acid]

The inorganic acid is used to dissolve an oxidized metal.

The inorganic acid is not particularly limited, and examples thereof include sulfuric acid, nitric acid, hydrochloric acid, phosphoric acid, hypophosphorous acid, carbonic acid, sulfamic acid, boric acid and hydofluoric acid.

From the viewpoint of environmental burdens, the inorganic acid is preferably inorganic acid other than hydrochloric acid, phosphoric acid or hydrofluoric acid.

From the viewpoint of achieving a high rate of dissolving copper and from the viewpoint of economy, the inorganic acid is preferably sulfuric acid.

A single kind of the inorganic acid may be used alone, or two or more kinds thereof may be used in combination.

From the viewpoint of etching properties, the content of the inorganic acid with respect to a total mass of the etching solution is preferably from 5% by mass to 20% by mass, more preferably from 5% by mass to 15% by mass, further preferably from 6% by mass to 13% by mass, particularly preferably from 8% by mass to 12% by mass.

[Other components]

The etching solution may include water, in addition to an amino acid compound, a nitrogen-containing heteroaromatic compound, a hydrogen peroxide and an inorganic acid.

Water is preferably subjected to a treatment to remove impurities such as metal ions or organic compounds, particles, or the like. Examples of the treatment include distillation, ionexchange treatment, filtering, and adsorption treatment of various kinds. Water is preferably pure water or ultrapure water.

The etching solution may include a halide ion source that generates fluoride ions, chloride ions, bromide ions or the like, in order to increase a degree of roughness in the irregularities. Typically, chloride ions are preferred as the halide ions.

Examples of the halide ion source include alkali metal salts such as sodium chloride, ammonium chloride and potassium chloride; oxohalides such as sodium chlorate and potassium chlorate; and copper chloride.

A single kind of the halide ion source may be used alone, or two or more kinds thereof may be used in combination.

When the etching solution includes a halide ion source, the content thereof may be from 0.0001% by mass to 0.05% by mass with respect to a total mass of the etching solution, from the viewpoint of etching properties.

The etching solution may include, as a solvent other than water, an aqueous organic solvent such as alcohols, glycols or ethers, in order to adjust the etching properties.

A single kind of the aqueous organic solution may be used alone, or two or more kinds thereof may be used in combination.

When the etching solution includes an aqueous organic solution, the content thereof may be approximately from 0.1% by mass to 20% by mass with respect to a total mass of the etching solution, from the viewpoint of etching properties.

The etching solution may include an organic acid other than amino acid compounds in order to adjust the etching properties. Examples of the organic acid other than amino acid compounds include aliphatic carboxylic acid and aromatic carboxylic acid.

A single kind of the organic acid may be used alone, or two or more kinds thereof may be used in combination.

When the etching solution includes an organic acid, the content thereof may be approximately from 1% by mass to 15% by mass with respect to a total mass of the etching solution.

The etching solution may include an additive typically used for an etching solution, other than the components as described above.

Examples of the additive include a stabilizer, a solubilizer, an antifoamer, a pH adjuster, a specific gravity adjuster, a viscosity adjuster, a wettability adjuster, a chelating agent, an oxidant, a reductant, and a surfactant.

A single kind of the additive may be used alone, or two or more kinds thereof may be used in combination.

When the etching solution includes an additive, the content thereof may be approximately from 0.001% by mass to 10% by mass with respect to a total mass of the etching solution.

[pH]

From the viewpoint of etching properties, the pH at 25°C of the etching solution is preferably 3.0 or less, more preferably 1.0 or less. The pH is measured with a pH meter.

The metal to be etched with the etching solution is not particularly limited. For example, the etching solution may be used for the etching of the metal in connection with the metal member as described above.

The method for producing the etching solution is not particularly limited. For example, the etching solution may be produced by mixing the components as described above, and stirring the mixture as necessary.

<Manufacturing method for metal member>

The method for manufacturing the metal member according to the present disclosure is not particularly limited. The metal member may be suitably manufactured by the manufacturing method according to the present disclosure as explained below.

The manufacturing method for a metal member according to the present disclosure includes a process of roughening at least a portion of a surface of a metal member (hereinafter, also referred to as a "roughening process").

The manufacturing method for a metal member may include a pretreatment process prior to the roughening process, or may include an aftertreatment process after the roughening process.

In the following, the manufacturing method for a metal member is described in detail by referring to an embodiment of the method in which a pretreatment process, a roughening process and an aftertreatment process are performed in this order.

[Pretreatment process]

A pretreatment process is performed for removing a film disposed at a surface of the metal member, such as a film formed of oxides, hydroxides or the like. The pretreatment process is typically performed by way of mechanical polishing or chemical polishing. When a surface of the metal member to be joined to a resin member has a significant degree of contamination such as machine oil, a degreasing process may be performed prior to the pretreatment process using an alkali aqueous solution, such as an aqueous solution of sodium hydroxide or potassium hydroxide.

[Roughening process]

The method for performing roughening to at least a portion of a surface of the metal member is not particularly limited, and examples thereof include chemical treatment and mechanical treatment. Examples of the mechanical treatment include sand blasting, knurling and laser processing. Examples of the chemical treatment include etching using an alkali etchant or an acid etchant.

A single kind of treatment may be performed alone, or two or more kinds thereof may be performed in combination. Among the methods for treatment, etching with an acid etchant is preferred.

The etching solution according to the present disclosure may be suitable used as an acid etchant. In this embodiment, the roughing process corresponds to a process of etching at least a portion of a surface of the metal member with the etching solution according to the present disclosure.

Examples of the method for contacting a metal member with an etching solution include a dip method in which a metal member is dipped in an etching solution; a spray method in which a metal member is sprayed with an etching solution; and a spin method in which an etching solution is ejected toward a metal member while spinning the same.

The temperature of the etching solution may be adjusted as appropriate in view of the type of a metal member, composition of an etching solution, or the like. For example, the temperature of the etching solution is preferably from 30°C to 60°C, more preferably from 35°C to 45°C.

The treatment time (i.e., the time period in which a metal member is in contact with an etching solution) may be adjusted as appropriate in view of the type of a metal member, composition of an etching solution, or the like. For example, the treatment time is preferably from 60 seconds to 480 seconds, more preferably from 150 seconds to 300 seconds.

The pH of an etching solution may vary due to the etching. Therefore, the pH of an etching solution may be adjusted during performing the etching, as necessary.

[Aftertreatment process]

The metal member is washed after performing the roughening process. The aftertreatment process typically includes water washing and drying. The aftertreatment process may include ultra-sonic washing for the purpose of desmutting.

When a metal member is prepared by performing etching with the etching solution according to the present disclosure, a nitrogen-containing heteroaromatic compound included in the etching solution may remain at a surface of the metal member. In other words, a nitrogen-containing heteroaromatic compound may exist at at least a portion of a surface (or at an entire surface). When a metal-resin complex is prepared using a metal member as mentioned above, a nitrogen-containing heteroaromatic compound may exist at at least a portion of a joint interface (or at an entire joint interface) between the metal member and the resin member.

<Manufacturing method for metal-resin complex>

The method for manufacturing the metal-resin complex according to the present disclosure is not particularly limited. The metal-resin complex is suitably manufactured by the method for a metal-resin complex according to the present disclosure as described below.

The manufacturing method for a metal-resin complex according to the present disclosure includes:

disposing the metal member according to the present disclosure at a mold (hereinafter, also referred to as a "mold-disposition process"); and
supplying a melted or softened resin to the mold (hereinafter, also referred to as a "resin-supply process").

In the mold-disposition process, a metal member is disposed at a mold. In the resin-supply process, a melted or softened resin is supplied to the mold.

The melted resin, which has been supplied to the mold, solidifies while being in contact with at least a portion of a roughened surface of the metal member (i.e., a surface satisfying Formula (1)).

The details and preferred embodiments of the resin are the same as the details and preferred embodiments of the resin included in the resin member of the metal-resin complex as described above.

Other conditions for the manufacture method may be determined as appropriate depending on known conditions.

Examples

In the following, the present disclosure is explained in detail by referring to the Examples. However, the present disclosure is not limited to the Examples.

<Example 1>

A metal material for manufacturing a metal member was prepared by cutting a copper alloy plate of Alloy No. C1100 according to JIS H 3100:2012 (thickness: 2 mm) into a size of 45 mm in length and 18 mm in width.

[Pretreatment process]

The metal material was subjected to degreasing by dipping the metal material in an aqueous sodium hydroxide of 2.6% by mass, containing 0.16% by mass of gluconic acid sodium salt (55°C), for 5 minutes while performing ultra-sonic washing, and then washing three times (20 seconds for each washing).

Subsequently, a coating at a surface of the metal material was removed by dipping the metal material in an aqueous sodium hydroxide of 0.002% by mass, containing 0.1% by mass of benzotriazole and 0.3% by mass of 2-isopropoxyethanol (35°C), for 20 seconds, and then washing three times (20 seconds for each washing).

[Roughening process]

An etching solution was prepared by dissolving, in water, 9.5% by mass of sulfuric acid, 2% by mass of hydrogen peroxide, 1.1% by mass of benzotriazole, 0.024% by mass of glycine and 0.00225% by mass of sodium chloride

The metal material was dipped in the etching solution (40°C) for 3 minutes and washed with water three times (20 seconds for each washing), whereby a fine structure was formed at a surface of the metal material. The pH of the etching solution at 25°C measured with a pH meter (D-71, manufactured by Horiba, Ltd.) was 0.3.

[Aftertreatment process]

The metal material was dipped in water (room temperature) for 3 minutes while performing ultra-sonic washing for desmutting. The metal material was dried at 80°C for 20 minutes.

The metal member of Example 1 was manufactured by the processes as described above.

(Measurement of values of L, a and b)

The values of L, a and b at a surface of the metal member was measured with a spectroscopic chronometer (NF 333, manufactured by Nippon Denshoku Industries Co., Ltd.)

[Preparation of metal-resin complex]

The metal member was disposed at a small-size dumbbell metal-insert mold, attached to an injection machine (J55-AD, the Japan Steel Works, Ltd.) Subsequently, polyphenylenesulfide (PPS, SUSTEEL BGX 545, Tosoh Corporation) was supplied to the mold by injection molding at a mold temperature of 150°C, thereby preparing a metal-resin complex in which a resin member is formed on the metal member. The area of a joint interface between the metal member and the resin member was 10 mm × 50 mm.

(Measurement of joining strength)

The shear joining strength (MPa) of the metal-resin complex was measured by a method according to ISO 19095.

Specifically, a breaking load (N) was measured with a tensile tester (Model 1323, Aikoh Engineering Co., Ltd.) with a special attachment at room temperature (23°C), under the conditions of a chuck distance of 60 mm and a tensile rate of 10 mm/min.

The shear joining strength (MPa) was calculated by dividing the breaking load (N) by the area of a joint interface between the metal member and the resin member (50 mm$^2$).

When the metal-resin complex has a shear joining strength of 15 MPa or more, the metal-resin complex was regarded as having excellent joining strength. The result is shown in Table 1.

(Evaluation of helium leakage)

A rate of helium leakage of the metal-resin complex was measured for the evaluation of airtightness. The measurement was performed with a helium leak detector (M-212 LD, Canon Anelva Corporation).

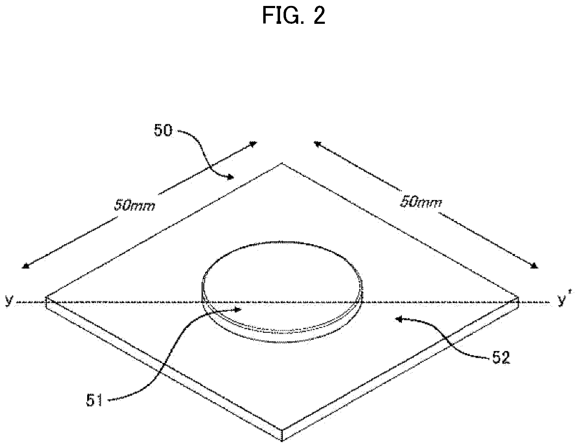

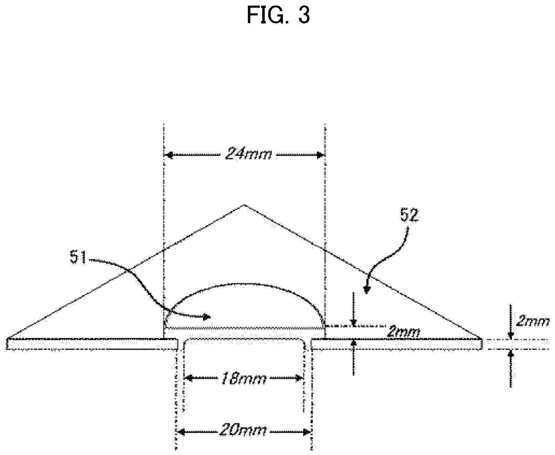

Fig. 2 illustrates a configuration of a specimen used for the evaluation of airtightness according to ISO 19095-2 (Type D. 2.2 specimen) and Fig. 3 illustrates a sectional view of the specimen in a diagonal direction. The specimen has a hole with a diameter of 20 mm formed at a rectangular metal plate (50 mm × 50 mm × 2 mm), and a resin member is attached to a circumference of the hole by injecting a light-absorbing material (see Fig. 3).

A portion at a periphery of a surface of the metal portion of the specimen was not etched in order to secure the airtightness of an O-ring (packing) to be disposed between the attachment of the helium leak detector (test port flange face) and the specimen. The portion was covered with a masking tape (No. 854, 3M Japan Limited) so as not to be etched.

A specimen in which helium leakage was not observed within 1 minute during the application of helium gas (0.1 MPa), i.e., a specimen with an increase in the amount of helium leakage of within 10%, as compared with the amount of helium leakage in a blank sample within 1 minutes during the application of helium gas ($5.5 \times 10^{-7}$ P a·m$^3$/sec), was categorized as P (showing favorable results in the helium leakage test) in Table 1.

A specimen in which helium leakage is observed, i.e., a specimen with an increase in the amount of helium leakage of greater than 10%, as compared with the amount of helium leakage in a blank sample within 1 minutes during the application of helium gas, was categorized as F in Table 1.

<Examples 2 to 23>

The metal member and the metal-resin complex were prepared in the same manner as Example 1, except that the composition of an etching solution, the resin type, the solution temperature and the treatment time were changed as described in Tables 1 to 4.

In Table 4, PP refers to polypropylene (Prime Polypro V7100, Prime Polymer Co., Ltd.), PA6 refers to polyamide 6 (Amilan CM1011G-30, Toray Industries, Inc.) and PBT refers to polybutylene terephthalate (Duranex 930HL, Polyplastics Co., Ltd.)

The metal member and the metal-resin complex obtained in Examples 2 to 23 were subjected to the measurement of values of L, a and b, the measurement of a joining strength, and the evaluation of a helium leakage. The results are shown in Table 1 to 4.

Table 1

| | | Example 1 | Example 2 | Example 3 | Example 4 | Example 5 | Example 6 | Example 7 | Example 8 |
|---|---|---|---|---|---|---|---|---|---|
| Etching solution composition [% by mass] | Sulfuric acid | 9.5 | 9.5 | 8 | 8 | 11.4 | 11.4 | 18 | 5 |
| | Hydrogen peroxide | 2 | 2 | 1.5 | 1.5 | 2.4 | 2.4 | 4 | 2 |
| | Benzotriazole | 1.1 | 1.1 | 0.88 | 0.88 | 1.32 | 1.32 | 2.2 | 1.1 |
| | Sodium chloride | 0.00225 | 0.00225 | 0.00225 | 0.00225 | 0.00225 | 0.00225 | 0.0045 | 0.00225 |
| | Glycine | 0.024 | 0.024 | 0.024 | 0.024 | 0.024 | 0.024 | 0.048 | 0.024 |
| pH | | 0.3 | 0.3 | 0.5-1.0 | 0.5-1.0 | 0.1 or less | 0.1 or less | 0.1 or less | 0.5-1.0 |
| Liquid temperature [°C] | | 40 | 40 | 35 | 35 | 45 | 45 | 40 | 40 |
| Treatment time [min] | | 3 | 4 | 3 | 5 | 3 | 2 | 1 | 3 |
| Resin for joining | | PPS | PPS | PPS | PPS | PPS | PPS | PPS | PPS |
| Shear joining strength [Mpa] | | 44 | 44 | 45 | 44 | 45 | 45 | 48 | 21.9 |
| Helium leakage | | P | P | P | P | P | P | P | F |
| L | | 53.2 | 55.8 | 53.8 | 54.9 | 58.7 | 59 | 52.7 | 63.3 |
| a | | 18 | 18.8 | 18 | 19.5 | 19.8 | 19.7 | 19.7 | 19.1 |
| b | | 19.3 | 20.1 | 19.2 | 19.8 | 20 | 19.8 | 17.5 | 21.5 |
| Formula (1) sufficiency | | Satisfied | Satisfied | Satisfied | Satisfied | Satisfied | Satisfied | Satisfied | Satisfied |
| Formula (2) sufficiency | | Satisfied | Satisfied | Satisfied | Satisfied | Satisfied | Satisfied | Satisfied | Satisfied |
| Formula (3) sufficiency | | Satisfied | Satisfied | Satisfied | Satisfied | Satisfied | Satisfied | Satisfied | Not satisfied |
| Formula (4) sufficiency | | Satisfied | Satisfied | Satisfied | Satisfied | Satisfied | Satisfied | Satisfied | Satisfied |

EP 4 509 289 A1

Table 2

| | | Example 9 | Example 10 | Example 11 | Example 12 | Example 13 | Example 14 | Example 15 |
|---|---|---|---|---|---|---|---|---|
| Etching solution composition [% by mass] | Sulfuric acid | 9.5 | 9.5 | 8 | 8 | 11.4 | 9.5 | 9.5 |
| | Hydrogen peroxide | 2 | 2 | 1.5 | 1.5 | 2.4 | 2 | 2 |
| | Benzotriazole | 1.1 | 1.1 | 0.88 | 0.88 | 1.32 | 1.1 | 1.1 |
| | Sodium chloride | 0.00225 | 0.00225 | 0.00225 | 0.00225 | 0.00225 | 0.00225 | 0.00225 |
| | Glycine | 0.024 | 0.024 | 0.024 | 0.024 | 0.024 | 0.24 | 0.5 |
| pH | | 0.3 | 0.3 | 0.5-1.0 | 0.5-1.0 | 0.1 or less | 0.3 | 0.3 |
| Liquid temperature [°C] | | 40 | 40 | 35 | 35 | 45 | 40 | 40 |
| Treatment time [min] | | 1 | 2 | 1 | 2 | 1 | 3 | 3 |
| Resin for joining | | PPS | PPS | PPS | PPS | PPS | PPS | PPS |
| Shear joining strength [Mpa] | | 38 | 40 | 41 | 45 | 35 | 41 | 41 |
| Helium leakage | | F | F | F | F | F | P | P |
| L | | 58.9 | 58.4 | 51.6 | 54.8 | 58.8 | 55.4 | 52.4 |
| a | | 16.4 | 17.8 | 15.2 | 16.5 | 17.1 | 19.3 | 20.1 |
| b | | 20 | 19 | 18.1 | 18.8 | 19.5 | 19.2 | 19.7 |
| Formula (1) sufficiency | | Satisfied | Satisfied | Satisfied | Satisfied | Satisfied | Satisfied | Satisfied |
| Formula (2) sufficiency | | Satisfied | Satisfied | Satisfied | Satisfied | Satisfied | Satisfied | Satisfied |
| Formula (3) sufficiency | | Not satisfied | Not satisfied | Not satisfied | Not satisfied | Not satisfied | Satisfied | Satisfied |
| Formula (4) sufficiency | | Satisfied | Satisfied | Satisfied | Satisfied | Satisfied | Satisfied | Satisfied |

Table 3

| | | Example 16 | Example 17 | Example 18 | Example 19 | Example 20 |
|---|---|---|---|---|---|---|
| Etching solution composition [% by mass] | Sulfuric acid | 9.5 | 9.5 | 9.5 | 9.5 | 9.5 |
| | Hydrogen peroxide | 2 | 2 | 2 | 2 | 2 |
| | Benzotriazole | 1.1 | 1.1 | 1.1 | 1.1 | - |
| | 3-methyl-1H-benzotriazole | - | - | - | - | 0.8 |
| | Sodium chloride | 0.00225 | 0.00225 | 0.00225 | 0.00225 | 0.00225 |
| | Glycine | - | - | - | - | 0.024 |
| | Alanine | 0.24 | - | - | - | - |
| | Arginine | - | 0.24 | - | - | - |
| | Triethanolamine | - | - | 0.24 | - | - |
| | Hydroxylamine sulfate | - | - | - | 0.24 | - |
| pH | | 0.3 | 0.3 | 0.3 | 0.3 | 0.3 |
| Liquid temperature [°C] | | 40 | 40 | 40 | 40 | 40 |
| Treatment time [min] | | 3 | 3 | 3 | 3 | 2.5 |

13

(continued)

|  | Example 16 | Example 17 | Example 18 | Example 19 | Example 20 |
|---|---|---|---|---|---|
| Resin for joining | PPS | PPS | PPS | PPS | PPS |
| Shear joining strength [Mpa] | 41 | 41 | 41 | 41 | 46 |
| Helium leakage | P | P | F | F | P |
| L | 54.8 | 55.6 | 54 | 52.7 | 45.3 |
| a | 20.6 | 20.2 | 18.4 | 17.5 | 16.2 |
| b | 19.9 | 19.8 | 18.7 | 18.5 | 17.9 |
| Formula (1) sufficiency | Satisfied | Satisfied | Satisfied | Satisfied | Satisfied |
| Formula (2) sufficiency | Satisfied | Satisfied | Satisfied | Satisfied | Satisfied |
| Formula (3) sufficiency | Satisfied | Satisfied | Satisfied | Satisfied | Satisfied |
| Formula (4) sufficiency | Satisfied | Satisfied | Satisfied | Satisfied | Satisfied |

Table 4

|  |  | Example 21 | Example 22 | Example 23 |
|---|---|---|---|---|
| Etching solution composition [% by mass] | Sulfuric acid | 9.5 | 9.5 | 9.5 |
|  | Hydrogen peroxide | 2 | 2 | 2 |
|  | Benzotriazole | 1.1 | 1.1 | 1.1 |
|  | Sodium chloride | 0.00225 | 0.00225 | 0.00225 |
|  | Glycine | 0.024 | 0.024 | 0.024 |
| pH | | 0.3 | 0.3 | 0.3 |
| Liquid temperature [°C] | | 40 | 40 | 40 |
| Treatment time [min] | | 3 | 3 | 3 |
| Resin for joining | | PP | PA6 | PBT |
| Shear joining strength [Mpa] | | 16 | 56 | 34 |
| Helium leakage | | P | P | P |
| L | | 52.6 | 52.4 | 53.0 |
| a | | 19.0 | 18.9 | 18.9 |
| b | | 18.4 | 18.4 | 18.3 |
| Formula (1) sufficiency | | Satisfied | Satisfied | Satisfied |
| Formula (2) sufficiency | | Satisfied | Satisfied | Satisfied |
| Formula (3) sufficiency | | Satisfied | Satisfied | Satisfied |
| Formula (4) sufficiency | | Satisfied | Satisfied | Satisfied |

As shown in Table 1 to 4, the metal-resin complexes of Examples 1 to 23, in which the metal member satisfies Formula (1), exhibited an excellent joining strength.

As shown in the comparison of Examples 1 to 17 and Examples 20 to 23, in which an amino acid compound was included in the etching solution as an amine compound, the metal-resin complexes of Examples 1 to 7, 14 to 17 and 20 to 23, obtained by using a metal member that satisfies Formula (2) and Formula (3), exhibited a favorable result in the helium leakage test.

As shown in the comparison of Examples 14 and 16-19, in which the etching solution contains an equal amount of an amine compound, the metal-resin complexes of Examples 14, 16 and 17, obtained by using an etching solution containing an amino acid compound, exhibited a favorable result in the helium leakage test.

Explanation of Symbols

10 Metal member
30 Resin member
100 Metal-resin complex

**Claims**

1. A metal member, having a surface in which values of L, a and b in CIE 1976 (L*a*b*) color space satisfy at least one of the following Formula (1) or Formula (2):

$$b \geq 16 \quad (1);$$

or

$$L \geq 2.336 \times a - 2.0536 \quad (2).$$

2. The metal member according to claim 1, wherein, in the surface, values of L and a in CIE 1976 (L*a*b*) color space satisfy the Formula (2) and the following Formula (3):

$$L \leq 2.336 \times a + 14.649 \quad (3).$$

3. The metal member according to claim 2, wherein, in the surface, a value of a in CIE 1976 (L*a*b*) color space satisfies the following Formula (4):

$$25 \geq a \geq 10 \quad (4).$$

4. The metal member according to any one of claim 1 to claim 3, comprising at least one of copper or copper alloy.

5. The metal member according to any one of claim 1 to claim 4, comprising a nitrogen-containing heteroaromatic compound that is disposed at at least a portion of the surface.

6. An etching solution, comprising an amine compound, a nitrogen-containing heteroaromatic compound, a hydrogen peroxide, and an inorganic acid.

7. The etching solution according to claim 6, wherein a content of the amine compound with respect to a total mass of the etching solution is from 0.0001% by mass to 5% by mass.

8. The etching solution according to claim 6, wherein a content of the nitrogen-containing heteroaromatic compound with respect to a total mass of the etching solution is from 0.01% by mass to 2.0% by mass.

9. The etching solution according to claim 6, wherein a content of the hydrogen peroxide with respect to a total mass of the etching solution is from 0.5% by mass to 7% by mass.

10. The etching solution according to claim 6, wherein a content of the inorganic acid with respect to a total mass of the etching solution is from 5% by mass to 20% by mass.

11. The etching solution according to claim 6, wherein the amine compound is an amino acid compound.

12. The etching solution according to claim 11, wherein the amino acid compound is an aliphatic amino acid or a salt thereof.

13. The etching solution according to claim 11, wherein the amino acid compound is an $\alpha$-amino acid or a salt thereof.

14. The etching solution according to any one of claim 6 to claim 13, wherein the nitrogen-containing heteroaromatic compound is an azole compound.

15. The etching solution according to claim 14, wherein the azole compound is a triazole compound.

16. A method of manufacturing the metal member according to any one of claim 1 to claim 5, the method comprising roughening at least a portion of a surface of the metal member.

17. The manufacturing method for the metal member according to claim 16, wherein the roughening is performed by etching at least a portion of the surface with the etching solution according to any one of claim 6 to claim 15.

18. A metal-resin complex, comprising the metal member according to any one of claim 1 to claim 5, and a resin member that is joined to at least a portion of a surface of the metal member.

19. The metal-resin complex according to claim 18, wherein the resin member comprises a thermoplastic resin.

20. The metal-resin complex according to claim 19, wherein the thermoplastic resin comprises at least one selected from the group consisting of polyolefin resin, polyvinyl chloride, polyvinylidene chloride, polystyrene resin, AS resin, ABS resin, polyester resin, poly(meth)acrylic resin, polyvinyl alcohol, polycarbonate resin, polyamide resin, polyimide resin, polyether resin, polyacetal resin, fluorine resin, polysulfone resin, polyphenylene sulfide resin and polyketone resin.

21. A manufacturing method for a metal-resin complex, the method comprising:

    disposing the metal member according to any one of claim 1 to claim 5 at a mold; and
    supplying a melted or softened resin to the mold.

FIG. 1

FIG. 2

# FIG. 3

## INTERNATIONAL SEARCH REPORT

International application No.

**PCT/CN2023/088201**

| A. | CLASSIFICATION OF SUBJECT MATTER |
|---|---|

B29C45/14(2006.01)i; C23F1/16(2006.01)i; B32B15/08(2006.01)i

According to International Patent Classification (IPC) or to both national classification and IPC

| B. | FIELDS SEARCHED |
|---|---|

Minimum documentation searched (classification system followed by classification symbols)

B29C45/-; C23F1/-; B32B15/-

Documentation searched other than minimum documentation to the extent that such documents are included in the fields searched

Electronic data base consulted during the international search (name of data base and, where practicable, search terms used)

CNABS, CNTXT, ENTXT, ENTXTC, VEN, CNKI: 三井化学, MITSUI, 嘉诺特科技, 陆海兵, 硫酸, H2SO4, 过氧化氢, 双氧水, H2O2, 苯并三唑, 苯骈三氮唑, 苯并三氮唑, benzotriazole, 氯化钠, 食盐, NACL, 甘氨酸, 氨基乙酸, 金属, 铁, 钢, 铜, 铝, 树脂, 塑料, 聚合物, 粗糙, 色度空间, 颜色空间, "CIE1976", 结合, 接合, 强度, 气密性, color space?, roughness+, chroma space?

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 107475715 A (ENF TECHNOLOGY CO., LTD.) 15 December 2017 (2017-12-15) description, paragraphs 34-80 | 6-10, 14-15 |
| A | CN 104736337 A (SUMITOMO BAKELITE CO., LTD.) 24 June 2015 (2015-06-24) description paragraphs 33-34, 57, 109, figure 2 | 1-5, 16-21 |
| A | CN 107690488 A (PANASONIC INTELLECTUAL PROPERTY MANAGEMENT CO., LTD.) 13 February 2018 (2018-02-13) entire document | 6-15 |
| A | CN 102102206 A (PROSPERCHEM INC.) 22 June 2011 (2011-06-22) entire document | 6-15 |
| A | JP 2014091820 A (PANASONIC CORP.) 19 May 2014 (2014-05-19) entire document | 1-5, 16-21 |
| A | JP 2018144475 A (MITSUI CHEMICALS INC.) 20 September 2018 (2018-09-20) entire document | 1-5, 16-21 |

☑ Further documents are listed in the continuation of Box C. ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **19 July 2023** | **20 July 2023** |

| Name and mailing address of the ISA/CN | Authorized officer |
|---|---|
| **China National Intellectual Property Administration (ISA/ CN)** <br> **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/088201**

**C.      DOCUMENTS CONSIDERED TO BE RELEVANT**

| Category* | Citation of document, with indication, where appropriate, of the relevant passages | Relevant to claim No. |
|---|---|---|
| A | JP 2019018547 A (MITSUI CHEMICALS INC.) 07 February 2019 (2019-02-07) entire document | 1-5, 16-21 |

Form PCT/ISA/210 (second sheet) (July 2022)

**INTERNATIONAL SEARCH REPORT**

International application No.

**PCT/CN2023/088201**

| Box No. III | Observations where unity of invention is lacking (Continuation of item 3 of first sheet) |
|---|---|

This International Searching Authority found multiple inventions in this international application, as follows:

The present application comprises five independent claims, wherein claim 1 relates to a metal member, claim 6 relates to an etching solution, claim 16 relates to a method for manufacturing a metal member, claim 18 relates to a metal-resin composite, and claim 21 relates to a method for producing a metal-resin composite. Independent claim 6 and independent claims 1, 16, 18 and 21 do not have a same or corresponding special technical feature, and therefore do not meet the requirement of unity of invention and do not comply with PCT Rule 13.1.

1. ☐ As all required additional search fees were timely paid by the applicant, this international search report covers all searchable claims.

2. ☑ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant. Consequently, this international search report is restricted to the invention first mentioned in the claims; it is covered by claims Nos.:

**Remark on Protest**
☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet) (July 2022)

**INTERNATIONAL SEARCH REPORT**
Information on patent family members

International application No.

**PCT/CN2023/088201**

| Patent document cited in search report | | | Publication date (day/month/year) | Patent family member(s) | | | Publication date (day/month/year) |
|---|---|---|---|---|---|---|---|
| CN | 107475715 | A | 15 December 2017 | KR | 20170138929 | A | 18 December 2017 |
| | | | | TW | 201816186 | A | 01 May 2018 |
| | | | | KR | 102090243 | B1 | 17 March 2020 |
| | | | | TW | 745379 | B1 | 11 November 2021 |
| | | | | CN | 107475715 | B | 08 April 2022 |
| CN | 104736337 | A | 24 June 2015 | CA | 2887921 | A1 | 24 April 2014 |
| | | | | EP | 2910372 | A1 | 26 August 2015 |
| | | | | EP | 2910372 | B1 | 06 May 2020 |
| | | | | KR | 20150067300 | A | 17 June 2015 |
| | | | | WO | 2014061520 | A1 | 24 April 2014 |
| | | | | JP | 5874840 | B2 | 02 March 2016 |
| | | | | JPWO | 2014061520 | A1 | 05 September 2016 |
| | | | | US | 2015273795 | A1 | 01 October 2015 |
| | | | | TW | 201434621 | A | 16 September 2014 |
| | | | | VN | 43066 | A | 27 July 2015 |
| | | | | IN | 201503497 | P1 | 20 November 2015 |
| | | | | CN | 104736337 | B | 08 March 2017 |
| | | | | ID | 201702199 | A | 10 March 2017 |
| CN | 107690488 | A | 13 February 2018 | JP | 6167444 | B1 | 26 July 2017 |
| | | | | JPWO | 2018047210 | A1 | 06 September 2018 |
| | | | | TW | 201811435 | A | 01 April 2018 |
| | | | | TWI | 631988 | B | 11 August 2018 |
| | | | | WO | 2018047210 | A1 | 15 March 2018 |
| | | | | CN | 107690488 | B | 01 March 2019 |
| CN | 102102206 | A | 22 June 2011 | None | | | |
| JP | 2014091820 | A | 19 May 2014 | None | | | |
| JP | 2018144475 | A | 20 September 2018 | None | | | |
| JP | 2019018547 | A | 07 February 2019 | JP | 7049792 | B2 | 07 April 2022 |

Form PCT/ISA/210 (patent family annex) (July 2022)

**EP 4 509 289 A1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 6387543 B